# EUROPEAN PATENT APPLICATION

(11) **EP 4 542 951 A1**
(43) Date of publication of application: **23.04.2025**
(21) Application number: 23826378.4
(22) Date of filing: 20.06.2023
(51) Int. Cl.: H04L 41/0893

(54) **CROSS-NETWORK-SLICE COOPERATION METHOD AND APPARATUS, AND NETWORK SLICE CAPABILITY ENABLEMENT SERVER**

(30) Priority: 20.06.2022 CN 202210695418
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: FU, Jiadi, Beijing 100032 (CN)
(74) Representative: Murgitroyd & Company
(86) International application number: PCT/CN2023/101220
(87) International publication number: WO 2023/246730

(57) **Abstract**

A cross-network slice collaboration method, a device and a network slice capability enablement server are provided, the method includes: receiving a first request sent by an application server; where the first request carries an identifier of a first application; obtaining Non-Public Network (NPN) slice information corresponding to the first application and specific slice information corresponding to the first application in a Public Land Mobile Network (PLMN); performing, according to the NPN slice information and the specific slice information in the PLMN, a service performance monitoring and/or slice resource optimization for the first application.

## Description

### CROSS REFERENCE OF RELATED APPLICATION

The present disclosure claims a priority of Chinese patent disclosure No. 202210695418.3 filed on June 20, 2022, which are incorporated herein by reference in its entirety.

### TECHNICAL FIELD

The present disclosure relates to the field of communication technology, and in particular to a cross-network slice collaboration method, a device and a network slice ccapability eenablement server.

### BACKGROUND

Network slicing is an important end-to-end key technology newly introduced in the 5th Generation Mobile Communication Technology (5G) network. It allows operators to manage multiple virtual end-to-end networks on a unified infrastructure in an on-demand networking manner. In order to meet the needs of closed management within the campus of industry customers, the Non-Public Network (NPN) includes two Non-Public Network architectures: 1) Public Network Integrated NPN (PLMN Integrated NPN, PNI-NPN), which divides the enterprise's exclusive wireless coverage area in the public network mode; 2) Standalone NPN (SNPN), an end-to-end independent private network. Users in the same industry can choose to deploy public network (PLMN) dedicated slices and Non-Public Network (NPN) slices at the same time.

However, current technologies are only capable of monitoring performance indicators of a single slice, scheduling and optimizing network resources within the slice, etc., and cannot meet the application-level end-to-end service quality assurance needs of industry customers.

### SUMMARY

The purpose of the embodiments of the present disclosure is to provide a cross-network slice collaboration method, device and network slice capability eenablement server to solve the problem that slice management in related technologies is only for a single slice and cannot meet the application-level end-to-end service quality assurance requirements of industry customers.

In order to solve above problem, an embodiment of the present disclosure provides a cross-network slice collaboration method, which is applied to a Network Slice Capability Enablement Server (NSCE-S), including:
receiving a first request sent by an application server; where the first request carries identifier of first application;
obtaining, according to the first request, Non-Public Network (NPN) slice information corresponding to the first application and specific slice information corresponding to the first application in a Public Land Mobile Network (PLMN);
performing, according to the NPN slice information and the specific slice information in the PLMN, a service performance monitoring and/or slice resource optimization for the first application.

The NPN slice information includes: NPN slice performance information and/or NPN slice status information;
and/or,
the specific slice information of the PLMN includes: slice performance information and/or slice status information.

Prior to obtaining, according to the first request, the NPN slice information corresponding to the first application and the specific slice information corresponding to the first application in the PLMN, the method further includes:
checking whether the first application is an authenticated user and whether the first application is authorized to initiate the first request;
obtaining, according to the first request, NPN slice information corresponding to the first application and specific slice information corresponding to the first application in the PLMN includes:
obtaining, according to the first request, the NPN slice information corresponding to the first application and the specific slice information corresponding to the first application in the PLMN, in the case that the first application is authenticated user and the first application is authorized to initiate the first request.

The first request includes: a service Quality of Service (QoS) monitoring request, where the service QoS monitoring request further includes at least one of the following:
network identifier of slice deployment;
application server identifier;
performance indicator of monitoring;
time period; and
monitoring area.

The obtaining, according to the first request, the NPN slice information corresponding to the first application and the specific slice information corresponding to the first application in the PLMN includes:
mapping the identifier of the first application to slice identities;
obtaining, according to the slice identities, NPN slice performance information and specific slice performance information in the PLMN.

The method further includes:
sending a data obtaining request to the NSCE-C, where the data obtaining request is configured to request to obtain application performance data of the first application;
receiving a data obtaining response sent by the NSCE-C, where the data obtaining response carries application performance data of the first application.

The performing the service performance monitoring on the first application according to the NPN slice information and the specific slice information in the PLMN includes:
analyzing and integrating the NPN slice performance information, the specific slice performance information in the PLMN and the application performance data of the first application to generate a user performance quality report;
sending a QoS monitoring response to the application server according to the user performance quality report, where the service QoS monitoring response includes at least one of the following:
   specified duration;
   specified area;
   end-to-end latency of a terminal;
   terminal uplink and downlink rate; and
   end-user perception indicator.

The first request includes: a slice resource optimization request, and the slice resource optimization request further includes at least one of the following:
network identifier of slice deployment;
application server identifier;
performance indicator expected to optimize; and
area expected to optimize.

The obtaining, according to the first request, the NPN slice information corresponding to the first application and the specific slice information corresponding to the first application in the PLMN includes:
mapping the identifier of the first application to slice identities;
obtaining, according to the slice identities, NPN slice status information and specific slice status information in the PLMN.

The performing the service performance monitoring and/or slice resource optimization for the first application according to the NPN slice information and the specific slice information in the PLMN includes:
performing an optimization analysis, according to the NPN slice status information and the specific slice status information in the PLMN, dynamically adjusting a shared resource allocation among slices, and generating an optimization analysis result;
according to the optimization analysis result, sending a first lifecycle management request to a NPN network element, and/or sending a second lifecycle management request to a PLMN network element; where the first lifecycle management request carries an updated configuration profile of the NPN slice; and the second lifecycle management request carries an updated configuration profile of specific slice of the PLMN;
receiving a first lifecycle management response sent by the NPN network element, and/or receiving a second lifecycle management response sent by the PLMN network element; where the first lifecycle management response and/or the second lifecycle management response carry slice resource adjustment result;
according to the slice resource adjustment result fed back by the NPN network element and the slice resource adjustment result fed back by the PLMN network element, sending a service resource optimization response to the application server.

A cross-network slice collaboration device is further provided in the embodiment of the present disclosure, applied to a Network Slice Capability Enablement Server (NSCE-S) and including:
a first receiving module, configured to receive a first request sent by an application server; where the first request carries an identifier of a first application;
a first obtaining module, configured to obtain, according to the first request, Non-Public Network (NPN) slice information corresponding to the first application and specific slice information corresponding to the first application in a Public Land Mobile Network (PLMN);
a processing module, configured to perform, according to the NPN slice information and the specific slice information in the PLMN, a service performance monitoring and/or slice resource optimization for the first application.

A Network Slice Capability Enablement Server (NSCE-S) is further provided in the embodiment of the present disclosure, including a processor and a transceiver, where the transceiver receives and sends data under a control of the processor, where the processor is configured to perform:
receiving a first request sent by an application server; where the first request carries an identifier of a first application;
obtaining, according to the first request, Non-Public Network (NPN) slice information corresponding to the first application and specific slice information corresponding to the first application in a Public Land Mobile Network (PLMN);
performing, according to the NPN slice information and the specific slice information in the PLMN, a service performance monitoring and/or slice resource optimization for the first application.

The NPN slice information includes: NPN slice performance information and/or NPN slice status information;
and/or,
the specific slice information of the PLMN includes: slice performance information and/or slice status information.

The processor is further configured to perform the following operations:
checking whether the first application is an authenticated user and whether the first application is authorized to initiate the first request;
obtaining, according to the first request, the NPN slice information corresponding to the first application and the specific slice information corresponding to the first application in the PLMN, in the case that the first application is the authenticated user and the first application is authorized to initiate the first request.

A Network Slice Capability Enablement Server (NSCE-S) is further provided in the embodiment of the present disclosure, including a memory, a processor, and a program stored in the memory and executable on the processor; where, when the processor executes the program, the cross-network slice collaboration method hereinabove is performed.

A computer-readable storage medium is further provided in the embodiment of the present disclosure, storing a computer program, where when the program is executed by a processor, the cross-network slice collaboration method hereinabove is performed.

The above technical solution of the present disclosure has at least the following beneficial effects:

In the cross-network slice collaboration method, device and Network Slice Capability Enablement server of the embodiments of the present disclosure, a method for implementing service performance monitoring and resource optimization across network slices based on an enabling network architecture can realize collaborative management operations between multiple network slices (including NPN network slices and specific slices in the public network) of industry applications, and provide a unified service invoke interface for industry customers; at the same time, it provides global performance monitoring across multiple types of networks for the same application, thereby improving the operation and maintenance efficiency and service quality of users in multi-network management scenarios.

### BRIEF DESCRIPTION OF THE DRAWINGS

FIG.1 is a schematic diagram showing an enabling network architecture provided by an embodiment of the present disclosure;
FIG.2 is a flowchart showing the steps of the cross-network slice collaboration method provided by an embodiment of the present disclosure;
FIG.3 is a schematic diagram showing an interaction of Example 1 provided in an embodiment of the present disclosure;
FIG.4 is a schematic diagram showing an interaction of Example 2 provided in an embodiment of the present disclosure;
FIG.5 is a schematic diagram showing the structure of a cross-network slice collaboration device provided by an embodiment of the present disclosure; and
FIG.6 is a schematic diagram showing the structure of a Network Slice Capability Enablement server provided in an embodiment of the present disclosure.

### DETAILED DESCRIPTION

In order to make the technical problems, technical solutions and advantages to be solved by the present disclosure more clear, a detailed description will be given below with reference to the accompanying drawings and specific embodiments.

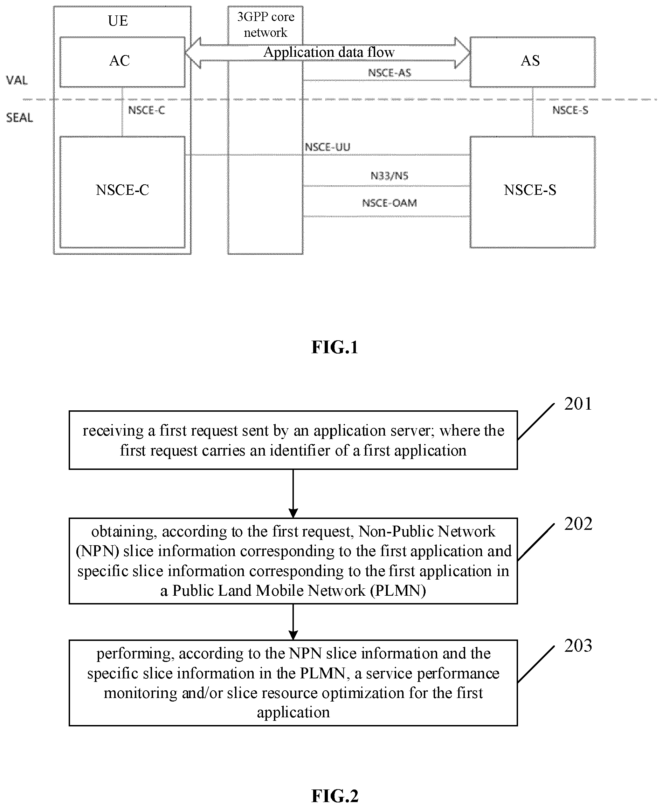

In the enabling network architecture shown in Figure 1, the Network Slice Capability Enablement server (NSCE-S) and slice enabling client (NSCE-C) are defined. Through the introduction of the enabling layer, the control and management capabilities of network slices are provided to the vertical industry application client and server to meet the monitoring, management and control requirements of vertical industry customers for slices. Among them, the slice enabling client (NSCE-C) is deployed on the terminal side, and the Network Slice Capability Enablement server (NSCE-S) can be optionally deployed on the industry customer side. The Network Slice Capability Enablement server can call 5G network capabilities through the N33/N5 interface, and call slice lifecycle management, network indicator monitoring and configuration update capabilities through the NSCE-OAM interface. NSCE-S belongs to the Service Enabler Architecture Layer for Verticals (SEAL) of vertical services and is one of its functional modules. The application server (AS) can uniformly call the underlying network slice-related capabilities through NSCE-S.

FIG. 2, an embodiment of the present disclosure provides a cross-network slice collaboration method, which is applied to a Network Slice Capability Enablement Server (NSCE-S), including:
Step 201, receiving a first request sent by an application server; where the first request carries an identifier of a first application;
Step 202: obtaining, according to the first request, Non-Public Network (NPN) slice information corresponding to the first application and specific slice information corresponding to the first application in a Public Land Mobile Network (PLMN);
Step 203: performing, according to the NPN slice information and the specific slice information in the PLMN, a service performance monitoring and/or slice resource optimization for the first application.

The cross-network slice collaboration method provided by the embodiment of the present disclosure can realize cross-network slice management (such as network performance, network status monitoring, resource management and optimization, etc.), and provide industry customers with a unified service application programming interface (Application Programming Interface, API) calling interface, thereby realizing unified management, status monitoring and resource optimization among multiple slices in multi-network scenarios. Among them, industry applications use the network capabilities opened by NSCE-S to synchronously manage and monitor slices across networks. NSCE-S can be deployed in a sinking park or in a centralized deployment mode, which is not specifically limited here.

As an optional embodiment, the system for applying the cross-network slice collaboration method provided in the embodiment of the present disclosure specifically includes:
Application server: A vertical industry commercial application server that can provide services to clients.
Slice enabling server (NSCE-S): It can act as an application function (AF), call the network capabilities of the 5G core network, and provide 5G core network (5G core, 5GC) as a unified interface for application servers. ) Network capability exposure function. It can be centrally deployed in the user domain or distributed in various campuses. It can be deployed in the operator domain as a unified capability calling interface of the operator network.
Non-public network (NPN): A non-public 5GC network dedicated to industry users. NSCE-S can obtain network operation data through the Network Exposure Function (NEF) network element or Operation Administration and Maintenance (OAM) in the Non-Public Network.
Slice enabling client (NSCE-C): An enabling layer client installed in industry terminals, which can register with NSCE-S and report application performance data, location data and other information to NSCE-S.
Vertical application layer client Client (VAL-C): Industry application client installed on the terminal. Request to call the service of the network-side application server.

In at least one embodiment of the present disclosure, the NPN slice information includes: NPN slice performance information and/or NPN slice status information; and/or, the PLMN specific slice information includes: slice performance information and/or slice status information.

As an optional embodiment, before step 202, the method further includes:
checking whether the first application is an authenticated user and whether the first application is authorized to initiate the first request;
accordingly, step 202 includes:
obtaining, according to the first request, the NPN slice information corresponding to the first application and the specific slice information corresponding to the first application in the PLMN, in the case that the first application is the authenticated user and the first application is authorized to initiate the first request.

In an optional embodiment of the present disclosure, the first request includes: a service quality of service (QoS) monitoring request, that is, for industry applications implemented across networks, comprehensive monitoring and analysis integration is performed based on the end-user application layer service experience (such as quality of experience (QoE)) and cross-network QoS data to provide an implementation mechanism for global end-to-end performance monitoring.

In another optional embodiment of the present disclosure, the first request includes: a business resource optimization request, that is, for industry applications implemented across networks, based on multi-network slice status information, a dynamic adjustment of resource allocation and adjustment mechanism across network slices is implemented.

Since service level agreement (SLA) of the network slice allocates resources based on a general template during the initial deployment process, and the service experience of each terminal in actual use is determined by a combination of factors such as the signal coverage of the terminal area, user distribution density, and business model, there may be congestion in some areas while resources in some areas are idle. Therefore, the embodiment of the present disclosure dynamically adjusts the resource allocation of cross-network (public and private) slices for a certain industry customer through business resource optimization requests, thereby optimizing resource utilization.

As an optional embodiment, in the case where the first request includes: a service quality of service QoS monitoring request, the service QoS monitoring request further includes at least one of the following:
network identifier of slice deployment;
application server identifier;
performance indicator of monitoring;
time period; and
monitoring area.
accordingly, step 202 includes:
mapping the identifier of the first application to slice identities;
obtaining, according to the slice identities, NPN slice performance information and specific slice performance information in the PLMN.

Optionally, the method further includes:
sending a data obtaining request to the NSCE-C, where the data obtaining request is configured to request to obtain application performance data of the first application;
receiving a data obtaining response sent by the NSCE-C, where the data obtaining response carries application performance data of the first application.
accordingly, step 203 includes:
   analyzing and integrating the NPN slice performance information, the specific slice performance information in the PLMN and the application performance data of the first application to generate a user performance quality report;
   sending a QoS monitoring response to the application server according to the user performance quality report, where the service QoS monitoring response includes at least one of the following:
      specified duration;
      specified area;
      end-to-end latency of a terminal;
      terminal uplink and downlink rate; and
      end-user perception indicator.

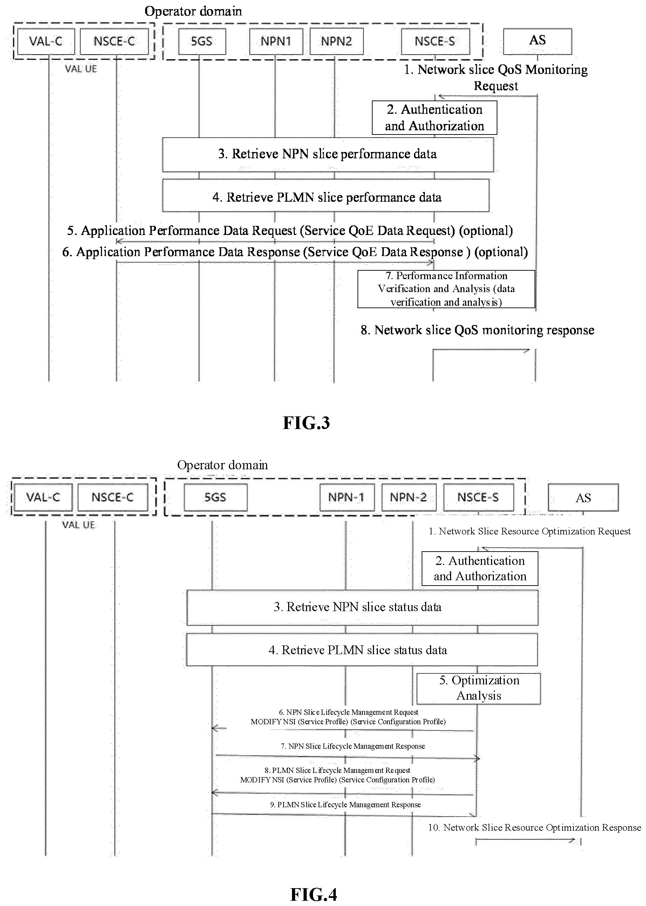

### Example 1, as shown in Figure 3:

Step 1: The application server sends a service quality monitoring request to NSCE-S (including the network ID (Network ID) of the slice deployment, the application server identifier, the application ID (Identification, ID), the specific monitoring performance indicators, time period, monitoring area, etc.).

Step 2: After receiving the request, NSCE-S checks whether the application is an authenticated user and whether it has the authority to initiate a slice monitoring request. If the application is not authorized to do this, NSCE-S responds with a failure response.

Step 3: NSCE-S maps the received application ID to a slice ID and obtains the slice performance (such as throughput, latency, etc.) information of the NPN.

In step 4, NSCE-S maps the received application ID to slice identities and obtains information on the performance (such as the number of real-time access users, throughput, latency, etc.) of the specified slice in the PLMN (public land mobile network).

Step 5: Optionally, the NSCE-S sends a data obtaining request to a user equipment (UE) (NSCE-C), such as application performance data (such as terminal QoE data of a specified application).

Step 6: Optionally, the NSCE-C replies to the data obtaining request to the NSCE-S.

Step 7: NSCE-S analyzes and integrates the data based on the performance and network status information obtained from the network side and the QoE information reported by the UE side (optional), and extracts the user performance quality report.

Step 8: The NSCE-S notifies the application server of the response to the monitoring request for the service QoS associated with the specified application ID in the slice (such as the UE end-to-end delay in the specified time period and area, UE uplink and downlink rates, terminal user perception indicators, etc.).

As another optional embodiment, the first request includes: a slice resource optimization request, and the slice resource optimization request further includes at least one of the following:
network identifier of slice deployment;
application server identifier;
performance indicator expected to optimize; and
area expected to optimize.
accordingly, step 202 includes:
   mapping the identifier of the first application to slice identities;
   obtaining, according to the slice identities, NPN slice status information and specific slice status information in the PLMN.
   accordingly, step 203 includes:
      performing an optimization analysis, according to the NPN slice status information and the specific slice status information in the PLMN, dynamically adjusting a shared resource allocation (such as radio resource) among slices, and generating an optimization analysis result;
      according to the optimization analysis result, sending a first lifecycle management request to a NPN network element, and/or sending a second lifecycle management request to a PLMN network element; where the first lifecycle management request carries an updated configuration profile of the NPN slice; and the second lifecycle management request carries an updated configuration profile of a specific slice of the PLMN;
      receiving a first lifecycle management response sent by the NPN network element, and/or receiving a second lifecycle management response sent by the PLMN network element; where the first lifecycle management response and/or the second lifecycle management response carry slice resource adjustment result;
      according to the slice resource adjustment result fed back by the NPN network element and the slice resource adjustment result fed back by the PLMN network element, sending a service resource optimization response to the application server.

### Example 2, as shown in Figure 4:

Step 1: The application server sends a network slice resource optimization request to NSCE-S (including the network ID of the slice deployment, the application server identifier, the application ID, the expected optimization indicator, the optimization area, etc.).

Step 2: After receiving the request, NSCE-S checks whether the application is an authenticated user and whether it has the authority to initiate a slice resource optimization request. If the application is not authorized to perform this operation, NSCE-S responds with a failure response.

Step 3: NSCE-S maps the received application ID to slice identities and obtains the slice status (such as resource utilization) information of the NPN network.

Step 4: NSCE-S maps the received application ID to slice identities and obtains information on the status (such as resource utilization) of the specified slice(s) in the PLMN network.

Step 5: NSCE-S performs optimization analysis (e.g., dynamically adjusts the allocation of shared radio resources between slices based on the user distribution model and existing network resource usage) based on the received application ID, the status of the PLMN and NPN network slices (such as resource utilization, etc.), and the information of the user performance quality report (optional) obtained previously.

Step 6: NSCE-S sends the slice lifecycle management request (i.e., ModifyNsi) to the corresponding NPN network element based on the optimization analysis results, including the updated service configuration profile corresponding to the slice(s).

Step 7: The NPN network element replies with slice lifecycle management response.

Step 8: Based on the optimization analysis results, NSCE-S sends the slice lifecycle management request (i.e., ModifyNsi) to the corresponding PLMN network element, which includes the updated service configuration profile corresponding to the slice(s).

Step 9: The PLMN network element replies with a slice lifecycle management response.

Step 10: NSCE-S returns network slice resource optimization response to the application server according to the resource adjustment results fed back by the NPN and PLMN network elements.

In summary, the disclosed embodiments enable network servers to achieve collaborative management operations between multiple network slices (including NPN network slices and private slices in the public network) for industry applications, and provide industry customers with a unified service call interface. Provide a global view of network slice performance monitoring across multiple types of networks for the same application, and improve the operation and maintenance efficiency of users in multi-network management scenarios. At the same time, it comprehensively considers the end-user application layer service experience QoE and network QoS data, and conducts comprehensive monitoring and analysis integration, which is conducive to improving the end-user service experience. Dynamically adjust the resource allocation of cross-network slices for a certain industry customer to avoid the imbalance of network resource allocation between slices deployed by the same industry customers and optimize resource utilization.

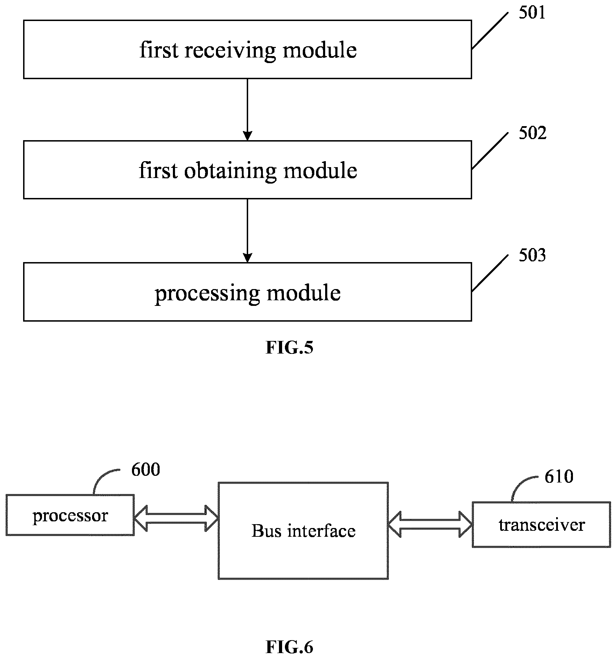

As shown in FIG. 5, the embodiment of the present disclosure further provides a cross-network slice collaboration device, which is applied to a Network Slice Capability Enablement Server (NSCE-S), including:
a first receiving module 501, configured to receive a first request sent by an application server; where the first request carries an identifier of a first application;
a first obtaining module 502, configured to obtain, according to the first request, Non-Public Network (NPN) slice information corresponding to the first application and specific slice information corresponding to the first application in a Public Land Mobile Network (PLMN);
a processing module 503, configured to perform, according to the NPN slice information and the specific slice information in the PLMN, a service performance monitoring and/or slice resource optimization for the first application.

The disclosed embodiment enables network servers to realize collaborative management operations between multiple network slices (including NPN network slices and private slices in the public network) of industry applications, and provides a unified service call interface for industry customers. Provide a global view of network slice performance monitoring across multiple types of networks for the same application, and improve the operation and maintenance efficiency of users in multi-network management scenarios. At the same time, it comprehensively considers the end-user application layer service experience QoE and network QoS data, and conducts comprehensive monitoring and analysis integration, which is conducive to improving the end-user service experience. Dynamically adjust the resource allocation of cross-network slices for a certain industry customer to avoid the imbalance of network resource allocation between slices deployed by the same industry customer, and optimize resource utilization.

It should be noted that the cross-network slice collaboration device provided in the embodiment of the present disclosure is a device capable of executing the above-mentioned cross-network slice collaboration method. All embodiments of the above-mentioned cross-network slice collaboration method are applicable to the device and can achieve the same or similar beneficial effects.

As shown in FIG.6, the embodiment of the present disclosure further provides a Network Slice Capability Enablement Server (NSCE-S), including a processor 600 and a transceiver 610, where the transceiver 610 receives and sends data under the control of the processor 600, and the processor 600 is configured to perform:
receiving a first request sent by an application server; where the first request carries an identifier of a first application;
obtaining, according to the first request, Non-Public Network (NPN) slice information corresponding to the first application and specific slice information corresponding to the first application in a Public Land Mobile Network (PLMN);
performing, according to the NPN slice information and the specific slice information in the PLMN, a service performance monitoring and/or slice resource optimization for the first application.

Optionally, the NPN slice information includes: NPN slice performance information and/or NPN slice status information;
and/or,
the specific slice information of the PLMN includes: slice performance information and/or slice status information.

Optionally, the processor is configured to perform:
checking whether the first application is an authenticated user and whether the first application is authorized to initiate the first request;
obtaining, according to the first request, the NPN slice information corresponding to the first application and the specific slice information corresponding to the first application in the PLMN, in the case that the first application is the authenticated user and the first application is authorized to initiate the first request.

Optionally, the first request includes: a service Quality of Service (QoS) monitoring request, where the service QoS monitoring request further includes at least one of the following:
network identifier of slice deployment;
application server identifier;
performance indicator of monitoring;
time period; and
monitoring area.

Optionally, the processor is configured to perform:
mapping the identifier of the first application to slice identities;
obtaining, according to the slice identities, NPN slice performance information and specific slice performance information in the PLMN.

Optionally, the processor is configured to perform:
sending a data obtaining request to the NSCE-C, where the data obtaining request is configured to request to obtain application performance data of the first application;
receiving a data obtaining response sent by the NSCE-C, where the data obtaining response carries application performance data of the first application.

Optionally, the processor is configured to perform:
analyzing and integrating the NPN slice performance information, the specific slice performance information in the PLMN and the application performance data of the first application to generate a user performance quality report;
sending a QoS monitoring response to the application server according to the user performance quality report, where the service QoS monitoring response includes at least one of the following:
   specified duration;
   specified area;
   end-to-end latency of a terminal;
   terminal uplink and downlink rate; and
   end-user perception indicator.

Optionally, the first request includes: a slice resource optimization request, and the slice resource optimization request further includes at least one of the following:
network identifier of slice deployment;
application server identifier;
performance indicator expected to optimize; and
area expected to optimize.

Optionally, the processor is configured to perform:
mapping the identifier of the first application to slice identities;
obtaining, according to the slice identities, NPN slice status information and specific slice status information in the PLMN.

Optionally, the processor is configured to perform:
performing an optimization analysis, according to the NPN slice status information and the specific slice status information in the PLMN, dynamically adjusting a shared resource allocation among slices, and generating an optimization analysis result;
according to the optimization analysis result, sending a first lifecycle management request to a NPN network element, and/or sending a second lifecycle management request to a PLMN network element; where the first lifecycle management request carries an updated configuration profile of the NPN slice; and the second lifecycle management request carries an updated configuration profile of specific slice of the PLMN;
receiving a first lifecycle management response sent by the NPN network element, and/or receiving a second lifecycle management response sent by the PLMN network element; where the first lifecycle management response and/or the second lifecycle management response carry slice resource adjustment result;
according to the slice resource adjustment result fed back by the NPN network element and the slice resource adjustment result fed back by the PLMN network element, sending a service resource optimization response to the application server.

The disclosed embodiment enables network servers to realize collaborative management operations between multiple network slices (including NPN network slices and private slices in the public network) of industry applications, and provides a unified service call interface for industry customers. A global view of network slice performance monitoring across multiple types of networks is provided for the same application to improve the operation and maintenance efficiency of users in multi-network management scenarios. At the same time, the end-user application layer service experience QoE and network QoS data are comprehensively considered, and comprehensive monitoring and analysis integration are carried out, which is conducive to improving the end-user service experience. Dynamically adjust the resource allocation of cross-network slices for a certain industry customer to avoid the imbalance of network resource allocation between slices deployed by the same industry customer, and optimize resource utilization.

It should be noted that the Network Slice Capability Enablement Server (NSCE-S) provided in the embodiment of the present disclosure is a Network Slice Capability Enablement server capable of executing the above-mentioned cross-network slice collaboration method. All embodiments of the above-mentioned cross-network slice collaboration method are applicable to the Network Slice Capability Enablement server and can achieve the same or similar beneficial effects.

The embodiment of the present disclosure also provides a Network Slice Capability Enablement Server (NSCE-S), including a memory, a processor, and a computer program stored in the memory and executable on the processor. When the processor executes the program, the various processes in the cross-network slice collaboration method embodiment as described above are implemented, and the same technical effect can be achieved. To avoid repetition, it will not be repeated here.

The embodiment of the present disclosure also provides a computer-readable storage medium on which a computer program is stored. When the program is executed by a processor, each process in the cross-network slice collaboration method embodiment described above is implemented, and the same technical effect can be achieved. To avoid repetition, it is not repeated here. The computer-readable storage medium is, for example, a read-only memory (ROM), a random access memory (RAM), a magnetic disk or an optical disk.

It should be understood by those skilled in the art that the embodiments of the present disclosure may be provided as methods, systems or computer program products. Therefore, the present disclosure may take the form of a complete hardware embodiment, a complete software embodiment or an embodiment combining software and hardware. Moreover, the present disclosure may take the form of a computer program product implemented on one or more computer-readable storage media (including but not limited to disk storage and optical storage, etc.) containing computer-usable program codes.

The present disclosure is described with reference to the flowcharts and/or block diagrams of the methods, devices (systems) and computer program products according to the embodiments of the present disclosure. It should be understood that each process and/or box in the flowchart and/or block diagram, as well as the combination of the processes and/or boxes in the flowchart and/or block diagram, can be implemented by computer program instructions. These computer program instructions can be provided to a processor of a general-purpose computer, a special-purpose computer, an embedded processor or other programmable data processing device to generate a machine, so that the instructions executed by the processor of the computer or other programmable data processing device generate a device for implementing the functions specified in one process or multiple processes and/or one box or multiple boxes in the flowchart.

These computer program instructions may also be stored in a computer-readable storage medium that can direct a computer or other programmable data processing device to operate in a specific manner, so that the instructions stored in the computer-readable storage medium produce a paper product including an instruction device that implements the functions specified in one or more processes in the flowchart and/or one or more boxes in the block diagram.

These computer program instructions may also be loaded onto a computer or other programmable data processing device, causing the computer or other programmable device to execute a series of operating steps to produce computer-implemented processing, whereby the instructions executed on the computer or other programmable device provide steps for implementing the functions specified in one or more processes in the flowchart and/or one or more boxes in the block diagram.

The above is a preferred embodiment of the present disclosure. It should be pointed out that for ordinary technicians in this technical field, several improvements and modifications can be made without departing from the principles described in the present disclosure. These improvements and modifications should also be regarded as the scope of protection of the present disclosure.

## Claims

1. A cross-network slice collaboration method, applied to a Network Slice Capability Enablement Server (NSCE-S) and comprising:
receiving a first request sent by an application server; wherein the first request carries an identifier of a first application;
obtaining, according to the first request, Non-Public Network (NPN) slice information corresponding to the first application and specific slice information corresponding to the first application in a Public Land Mobile Network (PLMN);
performing, according to the NPN slice information and the specific slice information in the PLMN, a service performance monitoring and/or slice resource optimization for the first application.

2. The method according to claim 1, wherein the NPN slice information comprises: NPN slice performance information and/or NPN slice status information;
and/or,
the specific slice information of the PLMN comprises: slice performance information and/or slice status information.

3. The method according to claim 1, wherein prior to the obtaining, according to the first request, the NPN slice information corresponding to the first application and the specific slice information corresponding to the first application in the PLMN, the method further comprises:
checking whether the first application is an authenticated user and whether the first application is authorized to initiate the first request;
obtaining, according to the first request, NPN slice information corresponding to the first application and specific slice information corresponding to the first application in the PLMN comprises:
obtaining, according to the first request, the NPN slice information corresponding to the first application and the specific slice information corresponding to the first application in the PLMN, in the case that the first application is the authenticated user and the first application is authorized to initiate the first request.

4. The method according to claim 1, wherein the first request comprises: a service Quality of Service (QoS) monitoring request, wherein the service QoS monitoring request further comprises at least one of the following:
network identifier of slice deployment;
application server identifier;
performance indicator of monitoring;
time period; and
monitoring area.

5. The method according to claim 4, wherein the obtaining, according to the first request, the NPN slice information corresponding to the first application and the specific slice information corresponding to the first application in the PLMN comprises:
mapping the identifier of the first application to slice identities;
obtaining, according to the slice identities, NPN slice performance information and specific slice performance information in the PLMN.

6. The method according to claim 5, further comprising:
sending a data obtaining request to the NSCE-C, wherein the data obtaining request is configured to request to obtain application performance data of the first application;
receiving a data obtaining response sent by the NSCE-C, wherein the data obtaining response carries application performance data of the first application.

7. The method according to claim 6, wherein the performing the service performance monitoring on the first application according to the NPN slice information and the specific slice information in the PLMN comprises:
analyzing and integrating the NPN slice performance information, the specific slice performance information in the PLMN and the application performance data of the first application to generate a user performance quality report;
sending a QoS monitoring response to the application server according to the user performance quality report, wherein the service QoS monitoring response comprises at least one of the following:
specified duration;
specified area;
end-to-end latency of a terminal;
terminal uplink and downlink rate; and
end-user perception indicator.

8. The method according to claim 1, wherein the first request comprises: a slice resource optimization request, and the slice resource optimization request further comprises at least one of the following:
network identifier of slice deployment;
application server identifier;
performance indicator expected to optimize; and
area expected to optimize.

9. The method according to claim 8, wherein the obtaining, according to the first request, the NPN slice information corresponding to the first application and the specific slice information corresponding to the first application in the PLMN comprises:
mapping the identifier of the first application to slice identities;
obtaining, according to the slice identities, NPN slice status information and specific slice status information in the PLMN.

10. The method according to claim 9, wherein performing the service performance monitoring and/or slice resource optimization for the first application according to the NPN slice information and the specific slice information in the PLMN comprises:
performing an optimization analysis, according to the NPN slice status information and the specific slice status information in the PLMN, dynamically adjusting a shared resource allocation among slices, and generating an optimization analysis result;
according to the optimization analysis result, sending a first lifecycle management request to a NPN network element, and/or sending a second lifecycle management request to a PLMN network element; wherein the first lifecycle management request carries an updated configuration profile of the NPN slice; and the second lifecycle management request carries an updated configuration profile of specific slice of the PLMN;
receiving a first lifecycle management response sent by the NPN network element, and/or receiving a second lifecycle management response sent by the PLMN network element; wherein the first lifecycle management response and/or the second lifecycle management response carry slice resource adjustment result;
according to the slice resource adjustment result fed back by the NPN network element and the slice resource adjustment result fed back by the PLMN network element, sending a service resource optimization response to the application server.

11. A cross-network slice collaboration device, applied to a Network Slice Capability Enablement Server (NSCE-S) and comprising:
a first receiving module, configured to receive a first request sent by an application server; wherein the first request carries an identifier of a first application;
a first obtaining module, configured to obtain, according to the first request, Non-Public Network (NPN) slice information corresponding to the first application and specific slice information corresponding to the first application in a Public Land Mobile Network (PLMN);
a processing module, configured to perform, according to the NPN slice information and the specific slice information in the PLMN, a service performance monitoring and/or slice resource optimization for the first application.

12. A Network Slice Capability Enablement Server (NSCE-S), comprising a processor and a transceiver, wherein the transceiver receives and sends data under a control of the processor, wherein the processor is configured to perform:
receiving a first request sent by an application server; wherein the first request carries an identifier of a first application;
obtaining, according to the first request, Non-Public Network (NPN) slice information corresponding to the first application and specific slice information corresponding to the first application in a Public Land Mobile Network (PLMN);
performing, according to the NPN slice information and the specific slice information in the PLMN, a service performance monitoring and/or slice resource optimization for the first application.

13. The NSCE-S according to claim 12, wherein the NPN slice information comprises: NPN slice performance information and/or NPN slice status information;
and/or,
the specific slice information of the PLMN comprises: slice performance information and/or slice status information.

14. The NSCE-S according to claim 12, wherein the processor is further configured to perform the following operations:
checking whether the first application is an authenticated user and whether the first application is authorized to initiate the first request;
obtaining, according to the first request, the NPN slice information corresponding to the first application and the specific slice information corresponding to the first application in the PLMN, in the case that the first application is the authenticated user and the first application is authorized to initiate the first request.

15. A Network Slice Capability Enablement Server (NSCE-S), comprising a memory, a processor, and a program stored in the memory and executable on the processor; wherein, when the processor executes the program, the cross-network slice collaboration method according to any one of claims 1 to 10 is performed.

16. A computer-readable storage medium, storing a computer program, wherein when the program is executed by a processor, the cross-network slice collaboration method according to any one of claims 1 to 10 is performed.
